# FASCICULE DE BREVET EUROPEEN

(11) **EP 1 336 233 B1**
(45) Date de publication et mention de la délivrance du brevet: **01.03.2006**
(21) Numéro de dépôt: 01997877.4
(22) Date de dépôt: 21.11.2001
(51) Int. Cl.: H02G 13/00

(54) **PARATONNERRE A DISPOSITIF D'AMORCAGE ET PROCEDE DE COMMANDE DU COURANT D'EFFLUVE D'UN TEL PARATONNERRE**
BLITZABLEITER MIT ZÜNDEINRICHTUNG UND VERFAHREN ZUR STEUERUNG DES KORONASTROMS EINES SOLCHEN BLITZABLEITERS
LIGHTNING CONDUCTOR WITH PRIMING DEVICE AND METHOD FOR CONTROLLING THE CORONA CURRENT OF SUCH A LIGHTNING CONDUCTOR

(30) Priorité: 22.11.2000 FR 0015051
(43) Date de publication de la demande: 20.08.2003
(73) Titulaire: Rousseau, Alain, 91890 Videlles (FR)
(72) Inventeur: Rousseau, Alain, 91890 Videlles (FR)
(74) Mandataire: Myon, Gérard Jean-Pierre
(86) Numéro de dépôt international: PCT/FR2001/003674
(87) Numéro de publication internationale: WO 2002/043216

(56) Documents cités:
- EP-A- 0 402 552
- CH-A- 670 532
- US-A- 4 679 114

## Description

L'invention a trait à un paratonnerre à dispositif d'amorçage et à un procédé de commande du courant d'effluve circulant dans un corps électriquement conducteur d'un tel paratonnerre.

Les paratonnerres à dispositif d'amorçage sont des systèmes de protection de bâtiments contre les impacts de la foudre. Ils sont aptes à générer de façon précoce un "courant précurseur ascendant" ou "leader ascendant" en direction d'un choc de foudre, de façon à créer un cheminement préférentiel de la foudre évitant ainsi un endommagement d'un bâtiment sur lequel ils sont montés. Cette caractéristique de génération précoce d'un précurseur ou leader ascendant permet de rendre le paratonnerre bien plus efficace qu'une simple pointe de Franklin, car les charges de ce courant ou leader ascendant montent à la rencontre d'un nuage et permettent de fixer l'impact de foudre en un point déterminé bien plus tôt que ne le ferait une pointe de Franklin.

Il est connu, par exemple de FR-A-2 553 236, de favoriser l'apparition d'un précurseur ascendant en amplifiant l'effet de pointe d'un paratonnerre par des décharges périodiques d'énergie dans la pointe d'un paratonnerre, ce qui a pour effet de masquer les précurseurs des autres parties du bâtiment qui ont moins tendance à être frappées par la foudre. Un tel précurseur ascendant, qui part d'un corps conducteur du paratonnerre, est censé entrer en contact relativement tôt avec un courant d'effluve descendant du nuage et donc fixer le point d'impact. Cependant, une bonne fixation du point d'impact ne peut être réalisée que dans certaines conditions. Tout d'abord, la distance géométrique entre le leader ascendant et le leader descendant doit remplir certaines conditions telles qu'énoncées, notamment, dans la norme NF C 17-102. La deuxième condition concerne le moment d'émission du précurseur ascendant qui ne doit pas être émis trop tôt. En effet, un précurseur ou leader émis trop tôt ne peut pas se propager de façon suffisante vers le précurseur ou leader descendant et demeure à proximité du paratonnerre en formant une charge d'espace qui gêne la progression ultérieure de ce précurseur ou leader en direction du précurseur ou leader descendant.

Les paratonnerres connus peuvent donc ne pas être totalement efficaces à cause de l'accumulation de charges d'espace dans leur voisinage.

C'est à cet inconvénient qu'entend plus particulièrement remédier l'invention en proposant un procédé de commande d'un tel paratonnerre qui assure que le précurseur ascendant est généré sans masquer le paratonnerre pour le précurseur descendant.

Dans cet esprit, l'invention concerne un procédé de commande du courant d'effluve circulant dans un corps électriquement conducteur d'un paratonnerre à dispositif d'amorçage qui comprend les étapes consistant à :
- minimiser le courant d'effluve tant qu'un choc de foudre n'est pas imminent et
- laisser ce courant s'établir juste avant un tel choc de foudre.

Le procédé de l'invention prend le contre-pied des systèmes connus, par exemple de FR-A-2 553 236, où l'on amplifie l'effet de pointe. Ce procédé permet de minimiser une émission anticipée de courant d'effluve, c'est-à-dire l'apparition de précurseur ascendant, en évitant la création d'une charge d'espace, alors que ce courant peut s'établir, en fonction des conditions climatiques, juste avant le choc de foudre. La détermination du moment où on laisse s'établir le courant d'effluve est effectuée grâce au champ électrostatique ambiant qui croît de façon exponentielle à l'approche du précurseur ou leader descendant vers la terre. Le procédé de l'invention permet donc de limiter le courant d'effluve tant que ce champ ne croit pas de façon importante, le paratonnerre étant alors configuré pour que ses charges se transforment en un précurseur ou leader ascendant qui se propage alors librement vers le nuage. En d'autres termes, le paratonnerre n'émet pas de décharges ou émet peu de décharges tant que le champ électrostatique ambiant n'est pas suffisant pour permettre une propagation libre du leader ascendant vers un leader descendant.

L'invention concerne également un paratonnerre permettant de mettre en oeuvre le procédé précédemment décrit et, plus spécifiquement, un paratonnerre à dispositif d'amorçage comprenant un corps électriquement conducteur apte à émettre des décharges d'effluves formant un précurseur ascendant, ce corps conducteur étant relié à la terre à travers un éclateur principal, caractérisé en ce que ce corps est également relié à la terre, en parallèle à cet éclateur principal, par un circuit de limitation et de contrôle du courant d'effluve circulant dans le corps conducteur.

Ce circuit de limitation du courant d'effluve a un rôle opposé aux circuits connus, notamment de FR-A-2 553 236, puisqu'il vise, dans la majorité des situations, à s'opposer à l'établissement d'un précurseur ascendant dans le paratonnerre, c'est-à-dire à minimiser l'effet de pointe du paratonnerre.

Selon des aspects avantageux mais non obligatoires de l'invention, le paratonnerre incorpore une ou plusieurs des caractéristiques suivantes.
- Le circuit de limitation et de contrôle comprend des moyens de décharge qui déchargent efficacement le courant d'effluve tant que le champ électrostatique ambiant a une intensité inférieure à une valeur de seuil prédéterminée.
- Le circuit de limitation et de contrôle comprend, en série, une inductance et un ensemble formé, en parallèle, d'un condensateur et d'un éclateur secondaire. Le condensateur permet de stocker les charges et l'éclateur secondaire protège le condensateur contre les tensions trop élevées. Le condensateur et l'éclateur secondaire constituent un circuit d'accumulation de charges dans le condensateur et d'évacuation de ces charges dans l'éclateur. L'inductance permet de limiter les variations de courant au niveau de l'ensemble précité, de telle sorte qu'un minimum de courant transite à travers l'inductance lors des variations de courant dues aux décharges qui se produisent dans l'ensemble formé du condensateur et de l'éclateur.
- Le circuit de limitation et de contrôle est intégré dans un support conducteur de section extérieure sensiblement égale à la section extérieure maximale du corps conducteur, ce support formant liaison électrique entre l'éclateur principal et la terre. Le circuit de limitation et de contrôle est électriquement isolé du support conducteur dans lequel il est intégré, sauf en son point bas qui est relié à la terre. Grâce à cet aspect de l'invention, le paratonnerre est conçu de telle sorte que son circuit peut être intégré dans un tube de taille standard, ce qui évite les protubérances génératrices d'effet couronnes indésirables et créatrices de charges d'espace parasites. Ceci facilite également l'intégration du paratonnerre sur les bâtiments, en tenant compte notamment de contraintes esthétiques, puisque certains paratonnerres sont visibles du sol. Cette intégration du circuit permet également d'envisager d'incorporer le paratonnerre à des mâts existant sur un bâtiment, telle qu'une hampe de drapeau ou un support d'antenne. Dans ce cas, le circuit est avantageusement noyé dans une résine isolante à l'intérieur du support précité, c'est-à-dire isolé électriquement par rapport à ce support.
- L'éclateur principal est formé par une bague isolante au moins partiellement intercalée entre le corps conducteur et le support conducteur. L'éclateur principal peut également inclure un éclateur auxiliaire incorporé dans le corps ou dans le support précités.
- Le corps conducteur est pourvu d'au moins un relief de promotion de décharges par effluve lors de l'approche d'un choc de foudre. Un tel relief facilite la création d'un précurseur ou leader ascendant lorsqu'un tel courant est nécessaire. Dans ce cas, on peut prévoir que ce relief comprend des arêtes formées par des collerettes circonférentielles du corps conducteur. Ces collerettes peuvent être séparées par des rainures formées dans une surface radiale externe de ce corps. Un autre mode de réalisation possible de ce relief est une pointe située en partie haute du corps conducteur.

L'invention sera mieux comprise et d'autres avantages de celle-ci apparaîtront plus clairement à la lumière de la description qui va suivre de trois modes de réalisation d'un paratonnerre conforme à son principe et de son procédé de mise en oeuvre, donnée uniquement à titre d'exemple et faite en référence aux dessins annexés dans lesquels :
- la figure 1 est un schéma électrique de principe d'un paratonnerre conforme à l'invention ;
- la figure 2 est une coupe longitudinale éclatée du paratonnerre de la figure 1 ;
- la figure 3 est une vue en perspective du paratonnerre des figures 1 et 2 ;
- la figure 4 est une coupe éclatée, analogue à la figure 2, pour un paratonnerre conforme à un second mode de réalisation de l'invention ;
- la figure 5 est une vue analogue à la figure 3 pour le paratonnerre de la figure 4 et
- la figure 6 est une vue analogue à la figure 5 pour un paratonnerre conforme à un troisième mode de réalisation de l'invention.

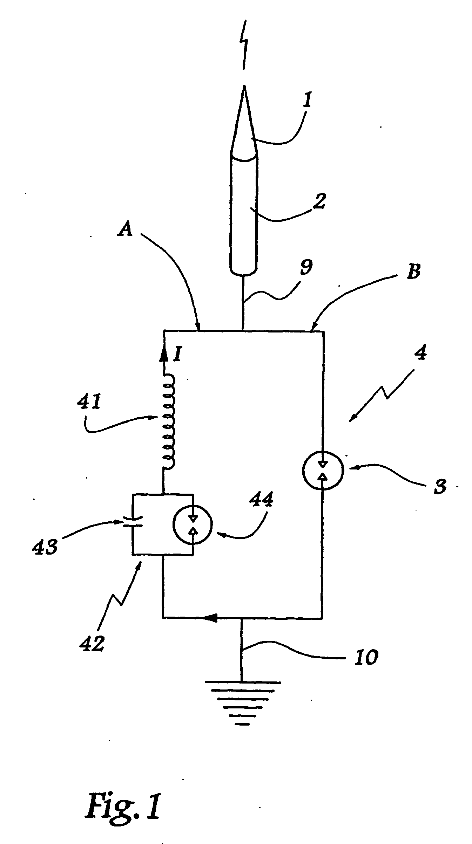

Le paratonnerre des figures 1 à 3 comprend une pointe conductrice 1 de forme conique montée sur un cylindre 2 également conducteur, les éléments 1 et 2 constituant un corps électriquement conducteur formant l'extrémité du paratonnerre. Les éléments 1 et 2 ont une taille faible en comparaison de celle des paratonnerres connus. Les faibles dimensions des éléments 1 et 2 permettent de réduire la captation du champ électrostatique et la création de courant qui serait autrement induit par ce champ. Le cylindre 2 est relié électriquement à une borne d'un éclateur principal 3 dont la borne opposée est reliée à la terre. En parallèle à l'éclateur 3, le cylindre 2 est également relié à un circuit 4 de limitation et de contrôle du courant d'effluve I généré par le paratonnerre au niveau de la pointe 1.

Le circuit 4 comprend une inductance 41 montée en série avec un ensemble 42 formé d'un condensateur 43 et d'un éclateur secondaire 44 montés en parallèle.

L'inductance 41 a une valeur comprise entre 100 et 1000 µH, alors que le condensateur 43 a une capacité comprise entre 100 et 4000 pF et que l'éclateur secondaire a une tension d'amorçage continue comprise entre 100 et 1000 volts. L'éclateur 3 a, quant à lui, une tension d'amorçage continue de l'ordre de 10 kV.

Le fonctionnement est le suivant :

Lorsqu'un courant I a tendance à se développer du fait des variations du champ électrostatique ambiant sans qu'un choc de foudre ne soit imminent, il se manifeste dans la branche A d'alimentation du cylindre 2 à travers le circuit 4, car la branche B reliant le cylindre 2 à la terre à travers l'éclateur 3 est ouverte aux tensions considérées. Le courant I a pour effet de charger le condensateur 43 jusqu'à ce que sa tension aux bornes soit supérieure à la tension d'amorçage de l'éclateur 44, ce qui conduit à une décharge dans cet éclateur qui a pour effet "de vider" ou "purger" la charge du condensateur, de telle sorte que l'essentiel de l'énergie de ce courant est dissipé au niveau de l'ensemble 42. Les charges stockées sont délivrées de façon intermittente.

Par ailleurs, toute variation du courant I circulant en direction du cylindre 2 est limitée par l'inductance 41, de telle sorte que le courant finalement transmis au cylindre est limité tant que le champ électrique à la pointe n'est pas suffisant. On obtient ainsi une limitation, en fait une minimisation, du courant I qui aurait tendance à générer des effluves ou un précurseur permanent au niveau de la pointe 1.

Lorsque le paratonnerre est soumis à des conditions climatiques très proches d'un choc de foudre, le champ électrostatique auquel il est soumis est éminemment variable, de telle sorte que le courant I créé entre la terre et le cylindre 2 devient important, au point que la charge et la décharge cycliques obtenues dans l'ensemble 42 deviennent des phénomènes négligeables devant le courant ainsi créé, ce courant se propageant alors à travers l'inductance 41 en direction du cylindre 2. Dans ces conditions, la pointe 1 est un relief à partir duquel se propage le précurseur ascendant en direction du précurseur descendant du nuage.

Ainsi, tant que le paratonnerre est dans un champ électrostatique variant faiblement, le courant I est minimisé grâce au circuit 4. Ensuite, c'est-à-dire juste avant un choc de foudre, ce courant peut s'établir à travers le circuit 4, car les composants 41 à 44 ne peuvent s'opposer à ce courant du fait de l'importance du champ électrique à la pointe et de la constante de temps de l'ensemble 42 du circuit 4. Cette constante de temps est choisie pour que l'ensemble 42 dissipe efficacement les charges correspondant au courant I tant que le courant est faible, par exemple de l'ordre de 100 mA, alors que cet ensemble laisse le courant se propager à travers l'inductance 41 vers le corps conducteur formé des éléments 1 et 2, ce qui se produit lors de brusques variations du champs électrostatique ambiant dues à l'imminence d'un choc de foudre.

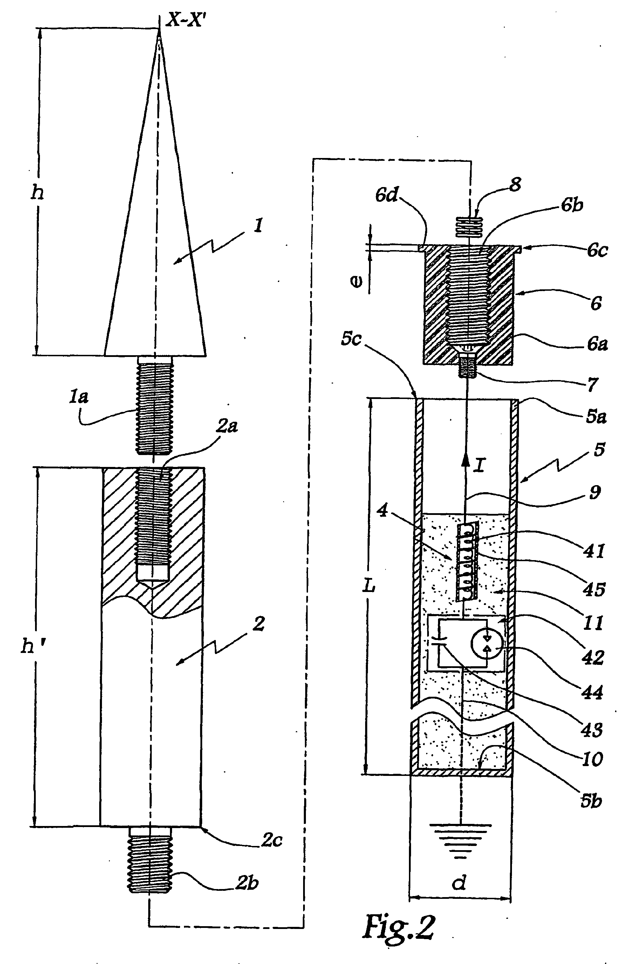

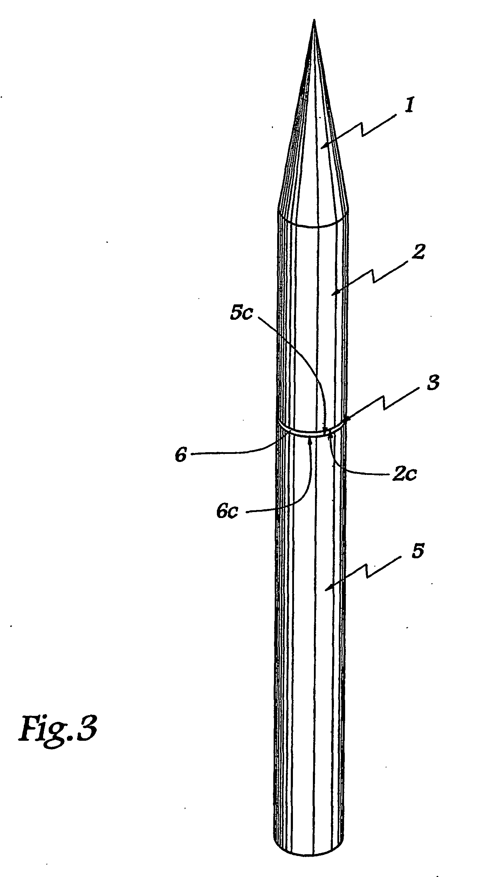

Comme il ressort plus particulièrement des figures 2 et 3, le circuit 4 est intégré à l'intérieur d'un tube 5 électriquement conducteur, par exemple métallique.

Une bague isolante 10 est insérée entre le cylindre 2 et le tube 5, cette bague présentant une forme de cuvette et comprenant une partie 6a reçue à l'intérieur de l'extrémité 5a du tube 5 tournée vers le cylindre 2.

On note X-X' l'axe longitudinal commun aux éléments 1, 2, 5 et 6 en configuration montée du paratonnerre. L'élément 5 constitue un support pour les éléments 1 et 2.

La pointe 1 est pourvue d'une partie filetée 1a s'étendant selon l'axe x-x' et apte à pénétrer dans un taraudage central 2a du cylindre 2, ce qui permet d'assembler les éléments 1 et 2 pour former un élément conducteur d'extrémité du paratonnerre.

Selon une variante non représentée de l'invention, les pièces 1 et 2 peuvent être remplacées par une unique pièce monobloc.

Par ailleurs, le cylindre 2 est pourvu d'une partie filetée 2b dimensionnée pour être vissée à l'intérieur d'un taraudage central 6b de la bague 6 qui est immobilisée par coopération de formes, vissage et/ou collage à l'intérieur de l'extrémité 5a du tube 5. Le vissage du cylindre 2 sur la bague 6 permet donc d'immobiliser ce cylindre par rapport au tube 5.

La bague 6 est traversée par une vis 7 s'étendant globalement selon l'axe X-X', alors qu'un ressort 8 garantit qu'un contact électrique est effectivement établi entre la vis 7 et la partie filetée 2b du cylindre 2.

L'extrémité de la vis 7, opposée au ressort 8, est reliée électriquement par un câble 9 au circuit 4, alors qu'un autre câble 10 relie ce circuit au fond 5b du tube 5, opposé à l'extrémité 5a et qui est lui-même connecté à la terre.

Selon une variante non représentée de l'invention, et en fonction des cotes et des tolérances choisies, le ressort 8 peut être supprimé.

L'éclateur principal 3 est formé au niveau de la surface radiale externe des éléments 2, 5 et 6 qui sont cylindriques et centrés sur l'axe X-X'. Le cylindre 2 présente une arête 2c, cylindrique et de même diamètre qu'une arête cylindrique 5c du tube 5, la surface radiale externe 6c d'une collerette 6d de la bague 6 étant disposée entre ces arêtes. Les éléments 2c, 5c et 6d constituent donc l'éclateur principal 3 représenté à la figure 1.

Le tube 5 constitue quant à lui la liaison électrique entre cet éclateur et la terre.

En cas d'impact de la foudre sur la pointe 1, le courant s'écoule à la surface des éléments 1, 2 et 5 à travers l'éclateur principal 3.

Le circuit 4 est noyé dans une résine isolante 11 à l'intérieur du tube 5, alors que l'inductance 41 est entourée d'un film isolant 45, ce qui permet une isolation électrique entre le circuit 4 et la masse d'une part, et entre ce circuit et l'éclateur principal 3 d'autre part. En variante, la résine il peut être utilisée sans le film 45 ou le film 45 peut être utilisé sans la résine 11, auquel cas il recouvre tout le circuit 4 pour l'isoler de son environnement.

La hauteur h de la pointe 1 peut être comprise entre 30 et 100 mm alors que la hauteur du cylindre 2 est choisie suffisante pour ne pas perturber le champ électrostatique au niveau de l'éclateur 3. Une valeur typique pour cette hauteur h' est de l'ordre de 110 mm.

L'épaisseur de la collerette 6d est liée à l'impédance du circuit 4 ainsi qu'aux conditions d'amorçage souhaitées qui sont influencées par les paramètres climatiques. Une épaisseure de 5 mm donne des résultats satisfaisants mais d'autres cotes peuvent être envisagées.

La longueur totale L du tube support 5 dépend, entre autres, des dimensions du circuit 4 à intégrer. Elle peut être, par exemple, de 400 mm, mais également plus courte ou plus longue en fonction de la distance à ménager entre l'élément conducteur formé de la pointe 1 et du cylindre 2 et de la terre la plus proche.

Le diamètre extérieur d des éléments 2, 5 et 6 dépend du circuit à intégrer et des propriétés mécaniques recherchées. Il peut être de l'ordre de 30 mm ou plus important, en fonction de la longueur L et des hauteurs h et h'. La hauteur h peut être adaptée en fonction du diamètre d pour garder une conicité adaptée de la pointe 1. La structure de l'invention permet une miniaturisation du paratonnerre dont le diamètre peut, en règle générale, être maintenu inférieur à 50 mm.

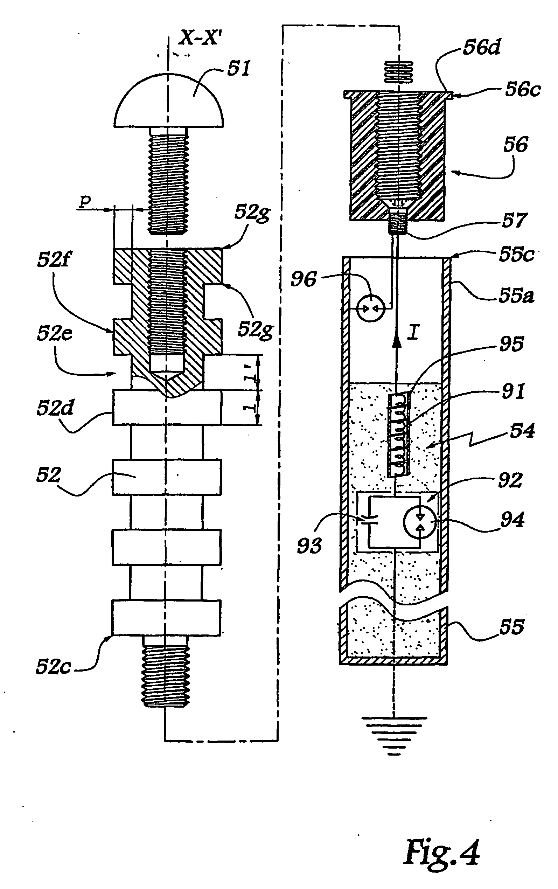

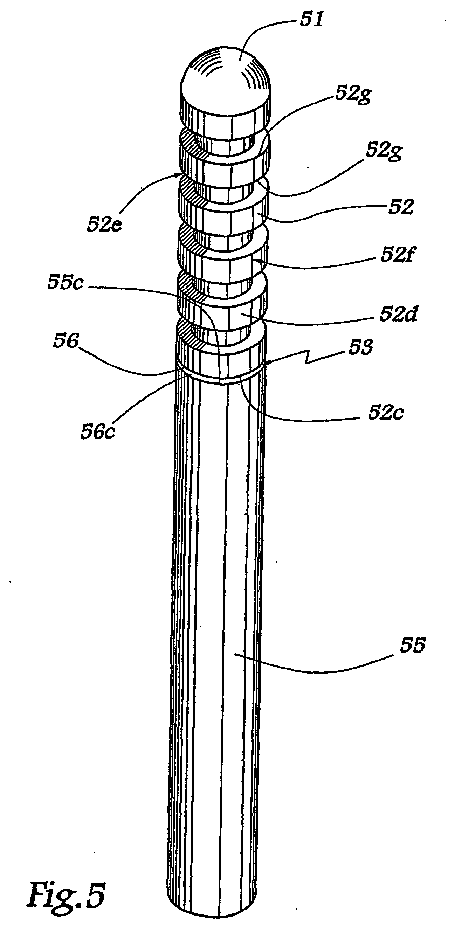

Dans le second mode de réalisation de l'invention représenté aux figures 4 et 5, les éléments analogues à ceux du premier mode de réalisation portent des références identiques augmentées de 50. Dans ce mode de réalisation, les composants intégrés au tube support 55 sont identiques à ceux du premier mode de réalisation et comprennent un circuit 54 de limitation et de contrôle du courant d'effluve qui intègre une inductance 91, entourée d'un film 95, et un ensemble 92 formé d'un condensateur 93 et d'un éclateur secondaire 94. Une collerette 56d d'une bague 56 est intégrée entre l'extrémité supérieure 55a du tube support 55, qui est lui-même relié à la terre, et un élément 52 cylindrique électriquement conducteur.

Un éclateur 53 est, comme précédemment, formé par la collerette 56d entre l'élément 52 et le tube 55 grâce aux arêtes en regard 52c et 55c de ces éléments avec laquelle est alignée la surface radiale externe 56c de la bague 56.

Ce mode de réalisation diffère du précédent en ce que le corps électriquement conducteur est formé d'une tête hémisphérique 51 et de l'élément cylindrique 52 qui est pourvu de collerettes 52d définies par des rainures 52e ménagées dans la surface radiale externe 52f de l'élément 52.

L'utilisation de la tête hémisphérique 51 permet de limiter encore, par rapport au premier mode de réalisation, le courant d'effluve, c'est-à-dire l'apparition d'un précurseur ou leader ascendant, tant que le paratonnerre n'est pas placé dans un champ électrostatique correspondant à l'imminence d'un choc de foudre. En effet, cette tête ne présente pas de pointe ou de relief favorisant les effluves.

En revanche, les arêtes 52g de jonction entre les surfaces externes et les surfaces radiales des collerettes 52d constituent des zones d'effluvage privilégiées qui sont utilisées lorsque un courant I se propage, à travers le circuit 54, en direction de l'élément 52.

Le diamètre de l'élément 52 peut être de l'ordre de 30 à 50 mm, alors que les collerettes 52d ont une largeur l comprise entre 4 et 10 mm et que les rainures 52e ont une largeur l' également comprise entre 4 et 10 mm, les largeurs l et l' pouvant être ou non identiques. La profondeur p des rainures 52e peut être comprise entre 2 et 10 mm. Le nombre de collerettes de l'élément 52 peut être compris entre 1 et 10, notamment de l'ordre de 5.

Les cotes des éléments du second mode de réalisation sont, pour l'essentiel, analogues à celle du premier mode de réalisation, la hauteur h de la tête 51 étant sensiblement égale à la moitié de son diamètre du fait de son caractère hémisphérique.

On note que les rainures 52e de ce second mode de réalisation sont en creux par rapport à la surface d'enveloppe de l'élément 52 qui est défini par la surface radiale externe 52f des collerettes 52d.

Le circuit de limitation et de contrôle 4 ou 54 des décharges est dynamique en ce sens qu'il réagit aux conditions extérieures, son fonctionnement étant auto-adapté. En effet, si le paratonnerre est dans des conditions où le champ électrostatique varie fortement, bien que l'inductance 41 ou 91 tende à limiter l'évolution du courant, le condensateur 43 ou 93 a tendance à se charger rapidement et à se décharger rapidement dans l'éclateur secondaire 44 ou 94. Au contraire, si ce courant a moins tendance à s'établir du fait des conditions extérieures, le condensateur se charge moins vite et l'éclateur fonctionne moins souvent.

Un éclateur auxiliaire 96 est connecté entre une vis 57, analogue à la vis 7 du premier mode de réalisation, et la surface intérieure du tube 55. L'éclateur principal 53 est alors constitué de la surface externe 56c de la bague 6 et de cet éclateur auxiliaire 96 qui est logé dans le tube 55, c'est-à-dire protégé contre la pollution externe. L'éclateur auxiliaire 96 peut être un éclateur à gaz ou tout autre type d'éclateurs. Il permet d'éviter l'érosion des parties métalliques 52c et 55c des éléments 52 et 55 en cas de choc de foudre. Enfin, il permet de mesurer le vieillissement du paratonnerre et d'en faire un suivi régulier dans le cadre de sa maintenance.

Selon un aspect avantageux de l'invention qui n'est pas représenté, un système de signalisation peut être adjoint à l'éclateur auxiliaire 96.

Les éclateurs 44 et 94 des circuits 4 et 54 peuvent être des éclateurs à gaz ou tout autre types d'éclateurs.

Grâce à la structure de l'éclateur principal 3 ou 53 de ces deux modes de réalisation, celui-ci ne fait pas saillie radialement par rapport aux éléments conducteurs 2 ou 52 ou aux tubes supports 5 ou 55, de sorte qu'il ne constitue pas une zone d'accumulation de salissures ou d'humidité susceptible d'abaisser sa tension d'amorçage, ce qui constitue un progrès important par rapport aux dispositifs connus. Cet avantage est dû, en particulier, au fait que le circuit de commande et de contrôle est dimensionné de façon à pouvoir être intégré dans le tube support correspondant.

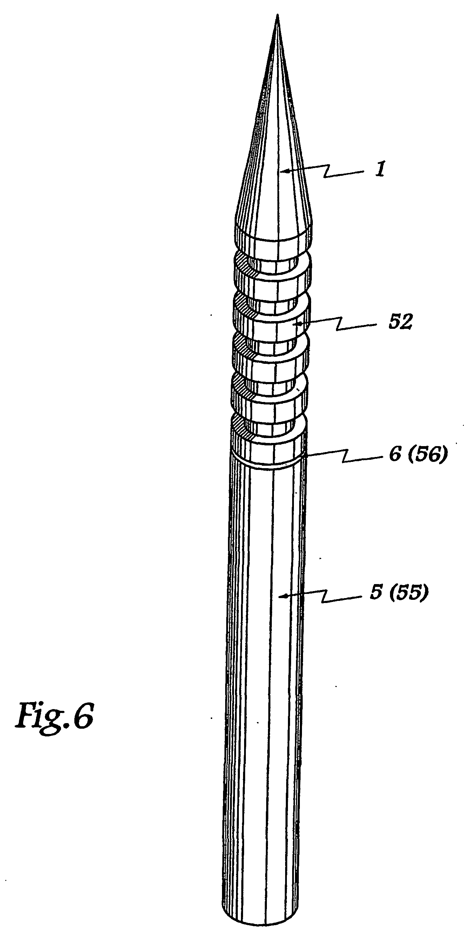

Les deux modes de réalisation décrits peuvent être combinés entre eux. En particulier, comme il ressort de la figure 6, il est possible d'utiliser un élément à collerettes du type de l'élément 52 avec une pointe du type de la pointe 1, ce qui favorise la formation de précurseurs ascendants lorsque le courant I est établi à travers le circuit de limitation et de contrôle.

Le paratonnerre du premier mode de réalisation peut également comprendre un éclateur auxiliaire du type de l'éclateur 96.

## Revendications

1. Paratonnerre à dispositif d'amorçage comprenant un corps électriquement conducteur apte à émettre des décharges d'effluve formant un précurseur ascendant, ledit corps conducteur étant relié à la terre à travers un éclateur principal, **caractérisé en ce que** ledit corps est également relié à la terre, en parallèle audit éclateur principal (3 ; 53), par un circuit (4 ; 54) de limitation et de contrôle du courant d'effluve (I) circulant dans ledit corps conducteur (1, 2 ; 51, 52).

2. Paratonnerre selon la revendication 1, **caractérisé en ce que** ledit circuit (4 ; 54) comprend des moyens (43, 44 ; 93, 94) de décharge qui déchargent efficacement ledit courant d'effluve (I) tant que le champ électrostatique ambiant a une intensité inférieure à une valeur de seuil prédéterminée.

3. Paratonnerre selon l'une des revendications 1 ou 2, **caractérisé en ce que** ledit circuit (4 ; 54) comprend, en série, une inductance (41 ; 91) et un ensemble (52 ; 92) formé, en parallèle, d'un condensateur (43 ; 93) et d'un éclateur secondaire (44 ; 94).

4. Paratonnerre selon l'une des revendications 1 à 3, **caractérisé en ce que** ledit circuit (4 ; 54) est intégré dans un support conducteur (5 ; 55) de section extérieure (d) sensiblement égale à la section extérieure maximale dudit corps conducteur (1, 2 ; 51, 52), ledit support formant liaison électrique entre ledit éclateur principal (3 ; 53) et la terre.

5. Paratonnerre selon la revendication 4, **caractérisé en ce que** ledit circuit (4 ; 54) est isolé électriquement par rapport audit support (5 ; 55).

6. Paratonnerre selon l'une des revendications 4 ou 5, **caractérisé en ce que** ledit éclateur principal (3 ; 53) inclut une bague isolante (6 ; 56) au moins partiellement intercalée entre ledit corps (1, 2 ; 51, 52) et ledit support conducteur (5 ; 55).

7. Paratonnerre selon l'une des revendications 4 à 6, **caractérisé en ce que** ledit éclateur principal (3 ; 53) inclut également un éclateur auxiliaire (96) incorporé dans ledit corps (1, 2 ; 51, 52) ou ledit support (5 ; 55).

8. Paratonnerre selon l'une des revendications 1 à 7, **caractérisé en ce que** ledit corps conducteur (1, 2 ; 51, 52) est pourvu d'au moins un relief (1 ; 52g) de promotion de décharges par effluve lors de l'approche d'un choc de foudre.

9. Paratonnerre selon la revendication 7, **caractérisé en ce que** ledit relief comprend des arêtes (52g) formées par des collerettes circonférentielles (52d) et séparées par des rainures (52e) formées dans une surface radiale externe (52f) dudit corps (51, 52).

10. Procédé de commande du courant d'effluve circulant dans un corps électriquement conducteur (1, 2 ; 51, 52) d'un paratonnerre à dispositif d'amorçage selon l'une des revendications précédentes, **caractérisé en ce qu'**il comprend les étapes consistant à :
- minimiser ledit courant d'effluve (I) tant qu'un choc de foudre n'est pas imminent et
- laisser ledit courant s'établir juste avant un tel choc de foudre.

## Claims

1. Lightning conductor with spark-over device comprising an electrically conductive body suitable for emitting corona discharges forming an upward leader stroke, said conductive body being linked to the earth through a main spark-gap, **characterized in that** said body is also linked to the earth, in parallel with said main spark-gap (3; 53), by a circuit (4; 54) for limiting and monitoring the corona current (I) circulating in said conductive body (1, 2; 51, 52).

2. Lightning conductor according to Claim 1, **characterized in that** said circuit (4; 54) includes discharge means (43, 44; 93, 94) which effectively discharge said corona current (I) as long as the ambient electrostatic field has an intensity less than a predetermined threshold value.

3. Lightning conductor according to one of Claims 1 or 2, **characterized in that** said circuit (4; 54) includes, in series, an inductance (41; 91) and an assembly (52; 92) formed, in parallel, by a capacitor (43; 93) and a secondary spark-gap (44; 94).

4. Lightning conductor according to one of Claims 1 to 3, **characterized in that** said circuit (4; 54) is incorporated in a conductive support (5; 55) of external section (d) roughly equal to the maximum external section of said conductive body (1, 2; 51, 52), said support forming an electrical link between said main spark-gap (3; 53) and the earth.

5. Lightning conductor according to Claim 4, **characterized in that** said circuit (4; 54) is electrically insulated relative to said support (5; 55).

6. Lightning conductor according to one of Claims 4 or 5, **characterized in that** said main spark-gap (3; 53) includes an insulating ring (6; 56) at least partially inserted between said body (1, 2; 51, 52) and said conductive support (5; 55).

7. Lightning conductor according to one of Claims 4 to 6, **characterized in that** said main spark-gap (3; 53) also includes an auxiliary spark-gap (96) incorporated in said body (1, 2; 51, 52) or said support (5; 55).

8. Lightning conductor according to one of Claims 1 to 7, **characterized in that** said conductive body (1, 2; 51, 52) is provided with at least one relief (1; 52g) promoting corona discharges when a lightning strike approaches.

9. Lightning conductor according to Claim 7, **characterized in that** said relief includes edges (52g) formed by circumferential flange rings (52d) and separated by grooves (52e) formed in an external radial surface (52f) of said body (51, 52).

10. Method of controlling the corona current circulating in an electrically conductive body (1, 2; 51, 52) of a lightning conductor with spark-over device according to one of the preceding claims, **characterized in that** it includes steps consisting in:
- minimizing said corona current (I) as long as no lightning strike is imminent, and
- allowing said current to be established just before such a lightning strike.

## Patentansprüche

1. Blitzableiter mit Durchschlagvorrichtung, einen elektrisch leitenden Körper umfassend, der Koronaentladungen abgeben kann, die einen aufsteigenden Vorläufer bilden, wobei der leitende Körper über eine Hauptfunkenstrecke geerdet ist, **dadurch gekennzeichnet, dass** der Körper auch parallel zur Hauptfunkenstrecke (3; 53) über eine Begrenzungs- und Steuerschaltung (4; 54) für den in dem leitenden Körper (1, 2; 51, 52) fließenden Koronastrom (I) geerdet ist.

2. Blitzableiter nach Anspruch 1, **dadurch gekennzeichnet, dass** die Schaltung (4: 54) Entladungseinrichtungen (43, 44; 93, 94) umfasst, die den Koronastrom (I) wirksam entladen, solange das elektrostatische Umgebungsfeld eine Stärke hat, die unter einem vorbestimmten Schwellenwert liegt.

3. Blitzableiter nach einem der Ansprüche 1 oder 2, **dadurch gekennzeichnet, dass** die Schaltung (4; 54) einen induktiven Widerstand (41; 91) und eine Einheit (52; 92) in Reihenschaltung umfasst, die aus einem Kondensator (43; 93) und einer zweiten Funkenstrecke (44; 94) in Parallelschaltung gebildet ist.

4. Blitzableiter nach einem der Ansprüche 1 bis 3, **dadurch gekennzeichnet, dass** die Schaltung (4; 54) in eine leitende Stütze (5; 55) mit einem Außenquerschnitt (d) eingebaut ist, der im Wesentlichen gleich dem maximalen Außenquerschnitt des leitenden Körpers (1, 2; 51, 52) ist, wobei die Stütze eine elektrische Verbindung zwischen der Hauptfunkenstrecke (3; 53) und der Erde herstellt.

5. Blitzableiter nach Anspruch 4, **dadurch gekennzeichnet, dass** die Schaltung (4; 54) gegenüber der Stütze (5; 55) elektrisch isoliert ist.

6. Blitzableiter nach einem der Ansprüche 4 oder 5, **dadurch gekennzeichnet, dass** die Hauptfunkenstrecke (3; 53) einen Isolierring (6; 56) enthält, der zumindest teilweise zwischen dem Körper (1, 2; 51, 52) und der leitenden Stütze (5; 55) eingesetzt ist.

7. Blitzableiter nach einem der Ansprüche 4 bis 6, **dadurch gekennzeichnet, dass** die Hauptfunkenstrecke (3; 53) auch eine zusätzliche Funkenstrecke (96) enthält, die in den Körper (1, 2; 51, 52) oder die Stütze (5; 55) eingebaut ist.

8. Blitzableiter nach einem der Ansprüche 1 bis 7, **dadurch gekennzeichnet, dass** der leitende Körper (1, 2; 51, 52) mit mindestens einer Erhöhung (1; 52g) ausgestattet ist, die bei einem nahenden Blitzeinschlag Koronaentladungen begünstigt.

9. Blitzableiter nach Anspruch 7, **dadurch gekennzeichnet, dass** die Erhöhung Stege (52g) umfasst, die von umlaufenden Rippen (52d) gebildet und durch Auskehlungen (52e) getrennt sind, die in einer radialen Außenfläche (52f) des Körpers (51, 52) gebildet sind.

10. Verfahren zur Steuerung des Koronastroms, der in einem elektrisch leitenden Körper (1, 2; 51, 52) eines Blitzableiters mit Durchschlagvorrichtung nach einem der vorhergehenden Ansprüche fließt, **dadurch gekennzeichnet, dass** es die Schritte umfasst, die darin bestehen:
- den Koronastrom (I) zu minimieren, solange kein Blitzeinschlag bevorsteht, und
- den Strom sich genau vor einem solchen Blitzeinschlag aufbauen zu lassen.
